# EUROPÄISCHE PATENTSCHRIFT

(11) **EP 3 599 571 B1**
(45) Veröffentlichungstag und Bekanntmachung des Hinweises auf die Patenterteilung: **31.01.2024**
(21) Anmeldenummer: 19183527.1
(22) Anmeldetag: 01.07.2019
(51) Int. Cl.: G06V 40/16

(54) **VORRICHTUNG ZUM BIOMETRISCHEN IDENTIFIZIEREN EINER PERSON MITTELS GESICHTSERKENNUNG UND BIOMETRISCHES VERFAHREN**
DEVICE FOR BIOMETRIC IDENTIFICATION OF A PERSON BY MEANS OF FACE RECOGNITION AND BIOMETRIC METHOD
DISPOSITIF D'IDENTIFICATION BIOMÉTRIQUE D'UNE PERSONNE PAR RECONNAISSANCE FACIALE ET PROCÉDÉ BIOMÉTRIQUE

(30) Priorität: 27.07.2018 DE 102018118240
(43) Veröffentlichungstag der Anmeldung: 29.01.2020
(73) Patentinhaber: Bundesdruckerei GmbH, 10969 Berlin (DE)
(72) Erfinder: Wolf, Andreas, 13158 Berlin (DE); Fischer, Jörg, 10317 Berlin (DE); Waldmüller-Littke, Jens, 12683 Berlin (DE)
(74) Vertreter: Bittner, Thomas L.

(56) Entgegenhaltungen:
- US-A- 5 430 473
- US-A1- 2007 165 244

## Beschreibung

Die Erfindung betrifft eine Vorrichtung zum biometrischen Identifizieren einer Person mittels Gesichtserkennung und ein biometrisches Verfahren.

### Hintergrund

Die Gesichtserkennung gehört zu den biometrischen Verfahren. Sie kann genutzt werden, um Personen zu identifizieren. Es sind Gesichtserkennungsverfahren bekannt, bei denen eine zweidimensionale geometrische Vermessung von Merkmalen oder Eigenschaften wie Augen, Nase und / oder Mund vorgenommen wird, um die Person zu identifizieren. Hierbei werden deren Position, Abstand und Lage zueinander bestimmt. Zum Bestimmen der Merkmale werden Bildaufnahmen des zu bestimmenden Gesichts digital ausgewertet.

Neben der zweidimensionalen biometrischen Gesichtserkennung, kann vorgesehen sein, das Gesicht dreidimensional zu erfassen, zum Beispiel mithilfe einer Streifenprojektion. Mittels einer Projektionseinrichtung (Projektor) wird das Messobjekt (Gesicht) zeitlich sequenziell mit Mustern von parallelen hellen und dunklen Streifen unterschiedlicher Breite beleuchtet. Eine oder mehrere Kameras registrieren das projizierte Streifenmuster unter einem bekannten Blickwinkel zur Projektion. Für jedes Projektionsmuster wird mit jeder Kamera ein Bild aufgenommen. Die gesuchten dreidimensionalen Koordinaten der Gesichtsoberfläche werden anschließend mittels digitaler Bildanalyse bestimmt. Derartige Verfahren sind rechenaufwendig und erfordern daher die Bereitstellung einer ausreichenden Rechnerkapazität, weshalb solche Methoden nicht geeignet sind, wenn die notwendige Rechenkapazität nicht zur Verfügung steht.

Aus dem Dokument US 2007 / 165244 A1 ist ein Gerät zur Benutzererfassung bekannt. Das Gerät ist eingerichtet, ein Bild eines Musters, das auf ein Ziel projiziert und auf der dreidimensionalen Oberfläche des Ziels, beispielsweise eines menschlichen Gesichts, verzerrt wird, sowie ein Bild einer zweidimensionalen Oberfläche des Ziels zu erfassen. Die Vorrichtung kann eine Beleuchtungseinheit enthalten, die dazu eingerichtet ist, ein gemustertes Licht in einer unsichtbaren Lichtwellenlänge auf die Oberfläche des Ziels zu projizieren, sowie eine 3D-Bilderfassungsvorrichtung, um ein Bild eines auf das Ziel projizierten und auf der dreidimensionalen Oberfläche des Ziels verzerrten Musters zu erfassen. Das Gerät kann auch ein 2D-Bilderfassungsgerät enthalten, das zum Erfassen eines Bildes einer zweidimensionalen Frontalansicht des Ziels im sichtbaren Licht geeignet ist. Das Gerät kann auch eine Orientierungseinheit enthalten, die das Gesicht des Ziels anzeigt, um die Positionierung des Ziels innerhalb der richtigen Sichtfelder zu erleichtern.

Das Dokument US 5,430,473 beschreibt eine Zweiwege-Videotelefonstation mit einem Fernsehbildschirm zum Anzeigen eines von einer entfernten Partei zu einem Telefongespräch übertragenen Bildes, einer Videokamera zum elektronischen Fotografieren eines menschlichen Motivs und zum periodischen Übertragen seines Bildes zu der entfernten Partei und einem Positionsanzeigegerät, um das Motiv im Sichtfeld der Kamera zu halten.

### Zusammenfassung

Aufgabe der Erfindung ist es, eine Vorrichtung und ein Verfahren zum biometrischen Identifizieren einer Person mittels Gesichtserkennung anzugeben, die auch im Fall einer nur in begrenztem Umfang zur Verfügung stehenden Rechenkapazität für die Bildanalyse eine zuverlässige Personenidentifizierung ermöglichen.

Zur Lösung sind eine Vorrichtung und ein Verfahren zum biometrischen Identifizieren einer Person mittels Gesichtserkennung nach den unabhängigen Ansprüchen 1 und 11 geschaffen. Ausgestaltungen sind Gegenstand von abhängigen Unteransprüchen.

Nach einem Aspekt ist eine Vorrichtung zum biometrischen Identifizieren einer Person mittels Gesichtserkennung geschaffen. Die Vorrichtung weist eine Projektionseinrichtung auf, die eingerichtet ist, mittels Bildaufnahme detektierbare Referenzpunkte auf ein zum Identifizieren einer Person zu bestimmendes Gesicht zu projizieren. Es ist eine Kameraeinrichtung vorgesehen, die eingerichtet ist, wenigstens eine Bildaufnahme des zu bestimmenden Gesichts mit den hierauf projizierten Referenzpunkten aufzunehmen. Eine Positionierhilfe ist eingerichtet, die Person beim Positionieren des Gesichts für die wenigstens eine Bildaufnahme zu unterstützen, derart, dass beim Aufnehmen der wenigstens einen Bildaufnahme Bildaufnahme-Bedingungen zumindest betreffend eine Gesichtsposition einstellbar sind, welche einer Position des Gesichts relativ zu der Projektionseinrichtung und der Kameraeinrichtung beim Aufnehmen einer Referenzbildaufnahme für das Gesicht mit den Referenzpunkten entspricht. Weiterhin weist die Vorrichtung eine Auswerteeinrichtung auf, die eingerichtet ist, die Person mittels Gesichtserkennung biometrisch zu identifizieren, wobei die Person identifiziert wird, wenn bei einem digitalen Bilddatenvergleich festgestellt wird, dass eine Verteilung der Referenzpunkte auf dem zu bestimmenden Gesicht in der wenigstens einen Bildaufnahme und eine Referenzverteilung der Referenzpunkte in der Referenzbildaufnahme übereinstimmen.

Nach einem weiteren Aspekt ist ein Verfahren zum biometrischen Identifizieren einer Person mittels Gesichtserkennung geschaffen, wobei das Verfahren Folgendes aufweist: Positionieren einer Projektionseinrichtung, einer Kameraeinrichtung und eines zu bestimmenden Gesichts einer Person relativ zueinander unter Verwendung einer Positionierhilfe, die eingerichtet ist, die Person beim Positionieren des Gesichts für wenigstens eine Bildaufnahme mit der Kameraeinrichtung zu unterstützen, derart, dass beim Aufnehmen der wenigstens einen Bildaufnahme, zumindest betreffend eine Gesichtsposition, Bildaufnahme-Bedingungen eingestellt werden, welche einer Position des Gesichts relativ zu der Projektionseinrichtung und der Kameraeinrichtung beim Aufnehmen einer Referenzbildaufnahme für das Gesicht mit den Referenzpunkten entspricht; Projizieren von Referenzpunkten, die mittels Bildaufnahme detektierbar sind, auf das zum identifizieren der Person zu bestimmende Gesicht mittels der Projektionseinrichtung; Aufnehmen der wenigstens einen Bildaufnahme des zu bestimmenden Gesichts mit den hierauf projizierten Referenzpunkten mittels der Kameraeinrichtung; und biometrisches Identifizieren der Person mittels Gesichtserkennung mit Hilfe einer Auswerteinrichtung, wobei die Person identifiziert wird, wenn bei einem digitale Bilddatenvergleich festgestellt wird, das eine Verteilung der Referenzpunkte auf dem zu bestimmenden Gesicht in der wenigstens eine Bildaufnahme und eine Referenzverteilung der Referenzpunkte in der Referenzbildaufnahme übereinstimmen.

Mittels der Positionierhilfe, die auch als Positionierhilfs- oder Positioniereinrichtung bezeichnet werden kann, ist es ermöglicht, dass die Person beim Aufnehmen der einen oder der mehreren Bildaufnahmen des zu bestimmenden Gesichts mit den hierauf projizierten Referenzpunkten ihr Gesicht reproduzierbar relativ zur Projektionseinrichtung und zur Kameraeinrichtung positioniert, sodass die eine oder die mehreren Bildaufnahmen herangezogen werden können, um hieraus die Verteilung der Referenzpunkte auf dem zu bestimmenden Gesicht zu ermitteln, welche dann mit der Referenzverteilung der Referenzpunkte in der einen oder den mehreren Referenzbildaufnahmen verglichen wird. Die Bildaufnahmen erfolgen unter (reproduzierbaren) Bildaufnahme-Bedingungen, die denen beim Aufnehmen des einen oder der mehreren Referenzbildaufnahmen für das Gesicht mit den Referenzpunkten entsprechen. Auf diese Weise kann das Auswerteverfahren in der Auswerteeinrichtung vereinfacht durchgeführt werden, weshalb hierbei auch geringere oder begrenzte Rechenkapazitäten ausreichend sind. Die biometrische Identifizierung der Person kann so auch in Anwendungsfällen genutzt werden, in denen nur eine geringe Rechenkapazität für eine digitale Bildanalyse zur Verfügung steht. Auch dann kann die Identifizierung der Person mittels Gesichtserkennung ausreichend schnell erfolgen. Das Projizieren der Referenzpunkte auf das zu bestimmende Gesicht erfolgt mittels strukturierten Lichts.

Die Auswerteeinrichtung weist für den digitalen Bilddatenvergleich ein oder mehrere Prozessoren sowie eine Speichereinrichtung auf, in welcher die eine oder die mehreren Referenzbildaufnahmen und / oder elektronische Informationen betreffend die Referenzverteilung der Referenzpunkte in der oder den Referenzbildaufnahmen lokal gespeichert sind. Die Personenidentifizierung kann auf diese Weise lokal ausgeführt werden, also in der Vorrichtung zum biometrischen Identifizieren mit den verschiedenen Einrichtungen, ohne dass es eines Datenaustausches mit anderen Datenverarbeitungseinrichtungen bedarf, beispielsweise entfernter Servereinrichtungen.

Mittels der Positionierhilfe kann die Person das Gesicht in eine Relativposition bezüglich der Projektionseinrichtung und der Kameraeinrichtung bringen, die dann für die anschließende Bildaufnahme ortsfest bleibt und in dieser Konstellation auch den Bildaufnahme-Bedingungen beim Aufnehmen des einen oder der mehreren Referenzbildaufnahmen entspricht.

Zum Bereitstellen der Referenzpunkte auf dem zu bestimmenden Gesicht kann ein Projektionsmuster aus der folgenden Gruppe auf das Gesicht projiziert werden: Punkteanordnung und Gittermuster. Das Projektionsmuster kann eine regelmäßige Anordnung von Punkten und / oder Linien aufweisen, die beispielsweise gleich beabstandet sind. Im Fall von sich kreuzenden Linien, beispielsweise bei Verwendung eines Gittermusters, können Kreuzungspunkte der Linien als Teil der Referenzpunkte herangezogen werden oder die Gruppe der referenzpunkte vollständig bilden.

Die Auswerteinrichtung kann eingerichtet sein, das Prüfen auf Übereinstimmung frei von einer Verwendung von Tiefeninformation auszuführen, die wahlweise aus dem der Bildaufnahme und / oder der Referenzbildaufnahme bestimmbar ist. Die Bildaufnahme und / oder die Referenzbildaufnahmen können mit oder ohne Erfassen dreidimensionaler Strukturen aufgenommen werden. Sofern die Bildaufnahmen und / oder die Referenzbildaufnahmen mit dreidimensionalen Informationen und / oder Bildtiefeninformation auf andere Art und Weise enthaltend erfasst sind, wird das Prüfen auf Übereinstimmung zwischen der Verteilung der Referenzpunkte und der Referenzverteilung der Referenzpunkte trotzdem ohne und frei von der Verwendung solcher Tiefeninformation ausgeführt, wodurch der Rechenaufwand geringer gehalten werden kann. Alternativ kann die Tiefeninformation aus den Aufnahmen des zu bestimmenden Gesichts beim biometrischen Identifizieren ergänzend herangezogen werden, sofern eine ausreichende Rechenkapazität in der Auswerteeinrichtung bereitgestellt ist.

Die Projektionseinrichtung, die Kameraeinrichtung, die Positionierhilfe und die Auswerteinrichtung können auf einem Kartenkörper angeordnet sein. Der Kartenkörper kann als eine Schichtanordnung von aufeinander laminierten Kunststoffschichten ausgebildet sein, wie dies für Kunststoffkarten oder Plastikkarten in verschiedenen Ausführungsformen als solches bekannt ist. Die verschiedenen Einrichtungen können teilweise oder ganz in den Kartenkörper eingelassen sein, insbesondere in zugeordnete Öffnungen oder Vertiefungen, beispielsweise in einen Kartenkörper aus aufeinander laminierten Kunststoffschichten. Weitere Materialien für den Kartenkörper sind Faserverbundmaterialien. Diese zeichnen sich durch hohe mechanische Stabilität aus und schützen somit die empfindliche Elektronik. Der Kartenkörper kann auch aus Metall bestehen.

Die Projektionseinrichtung und die Kameraeinrichtung können im Bereich einer Schmalseite (Rand) des Kartenkörpers, insbesondere nebeneinanderliegend, angeordnet sein, der als Kunststoffkartenkörper ausgeführt sein kann. Die Positionierhilfe kann mittels des Kartenkörpers selbst gebildet sein. Wenn der Kartenkörper vom Nutzer im Abstand einer Armlänge vor sein Gesicht hält und nur noch den Rand sieht, ist die Position des Gesichts relativ zur Projektionseinrichtung und zur Kameraeinrichtung optimal und wiederholgenau ausgerichtet.

Die Projektionseinrichtung, die Kameraeinrichtung, die Positionierhilfe und die Auswerteinrichtung können auf einem Artikel aus der folgenden Gruppe angeordnet sein: Identitätsdokument (beispielweise Ausweis, Bankkarte oder dergleichen), mobiler Träger wie Token und einem Wearable wie Anhänger. Das Identitätsdokument oder der mobile Token können zum Beispiel mit einer Kunststoffkarte gebildet sein.

Die Positionierhilfe kann eine Spiegeleinrichtung aufweisen, die eingerichtet ist, bei korrekter Positionierung des zu bestimmenden Gesichts die Augen in Markierungen auf der Spiegeleinrichtung zu spiegeln. Beim Aufnehmen der einen oder der mehreren Bildaufnahmen kann die Person so die Vorrichtung gegenüberliegend dem zu bestimmenden Gesicht halten, derart, dass eine korrekte Positionierung festgestellt wird, wenn sich die Augen in den Markierungen auf der Spiegeleinrichtung spiegeln, wobei die Markierungen beispielsweise mit einem jeweiligen Fadenkreuz gebildet sein können. In einer Ausführungsform sind die Markierungen hinsichtlich ihrer Lage an der Positionierhilfe eingerichtet, bei korrekter Positionierung des Gesichts in Spiegelbereichen der Pupillenmitte der Augen zu liegen.

Die Positionierhilfe kann Lichtquellen aufweisen, die eingerichtet sind, für die Person dann gleichzeitig sichtbar zu sein, wenn das zu bestimmende Gesicht in der Referenzposition angeordnet ist. Die Lichtquellen können beispielsweise jeweils mithilfe einer lichtemittierenden Diode gebildet sein und in verschiedenen Ausgestaltungen als Lichtquellen mit einem sehr kleinen Abstrahlwinkel aufweisen, zum Beispiel einen Abstrahlwinkel von etwa einem halben Grad, was in einer Entfernung von 50cm eine Breite des Kegels von etwa 5 mm ergibt. Die Lichtquellen können in gegenüberliegenden Randbereichen der Kunststoffkarte oder des Identitätsdokuments angeordnet sein. Zumindest ein teil der Lichtquellen kann übereinanderliegend angeordnet sein. im Fall der Ausbildung der Vorrichtung mit einer Kunststoffkarte oder einem Identitätsdokument, können die Kameraeinrichtung und die Projektionseinrichtung auf in gegenüberliegenden Randbereichen angeordnet sein, die verschieden sein können von den Randbereichen, in denen die Lichtquellen angeordnet sind.

Die Projektionseinrichtung kann eine holografische Projektionseinrichtung aufweisen.

Die Projektionseinrichtung kann eingerichtet sein, die Referenzpunkte auf dem zu bestimmenden Gesicht mittels Abstrahlen von Lichtstrahlen mit einer Wellenlänge im sichtbaren Bereich und / oder Naheninfrarot-Bereich bereitzustellen.

In Verbindung mit dem Verfahren zum biometrischen identifizieren der Person mittels Gesichtserkennung können die vorangehend im Zusammenhang mit der Vorrichtung erläuterten Ausgestaltungen entsprechend vorgesehen sein.

### Beschreibung von Ausführungsbeispielen

Im Folgenden werden weitere Ausführungsbeispiele unter Bezugnahme auf Figuren einer Zeichnung näher erläutert. Hierbei zeigen:
- Fig. 1: eine schematische Darstellung einer Kunststoffkarte mit einer Vorrichtung zum lokalen biometrischen Identifizieren einer Person mittels Gesichtserkennung;
- Fig. 2: eine schematische Darstellung eines Gesichts mit einer hierauf projizierten Verteilung von Referenzpunkten und
- Fig. 3: eine schematische Darstellung einer Kunststoffkarte mit einer Vorrichtung zum lokalen biometrischen Identifizieren einer Person mittels Gesichtserkennung.

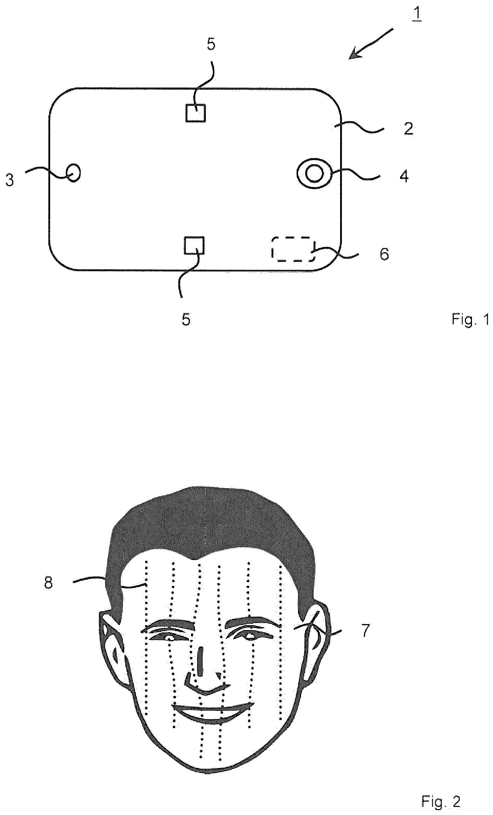

Fig. 1 zeigt eine schematische Darstellung einer Karte 1 mit einem Kartenkörper 2, insbesondere eine Kunststoffkarte mit einem Kunststoffkartenkörper, der beispielsweise mittels Aufeinanderlaminieren von mehreren Kunststoffschichten gebildet ist, wie dies in verschiedenen Ausführungsformen als solches bekannt ist. Beispielsweise kann es sich bei der Kunststoffkarte 1 um eine Identitätskarte für eine Person handeln, beispielsweise einen Ausweis, eine Geldkarte oder eine Eintrittskarte für eine Veranstaltung.

In Öffnungen oder Vertiefungen des Kartenkörpers 2 sind die folgenden Elemente angeordnet: eine Projektionseinrichtung 3, eine Kameraeinrichtung 4, eine Positionierhilfe 5 und eine Auswerteeinrichtung 6.

Die Projektionseinrichtung ist eingerichtet, auf ein Gesicht 7 mittels Bildaufnahme detektierbare Referenzpunkte 8 zu projizieren (vgl. Fig. 2). Die Referenzpunkte 8 können mithilfe von Punkten und / oder Linien auf das Gesicht 7 projiziert werden. Hierfür kann Licht im sichtbaren Wellenlängenbereich und / oder im Bereich nahes Infrarot verwendet werden. Fig. 2 zeigt eine schematische Darstellung für das zu bestimmende Gesicht 7 mit den hierauf projizierten Referenzpunkten 8. Die Verteilung der Referenzpunkte 8 ist aufgrund der Projektion auf das Gesicht 7 für dieses Gesicht 7 typisch (personenspezifisch) und wird zur Identifizierung der Person herangezogen.

Von dem Gesicht 7 mit den Referenzpunkten 8 werden mithilfe der Kameraeinrichtung 4 ein oder mehrere Bildaufnahmen gemacht. Um Bildaufnahme-Bedingungen für die Bildaufnahmen reproduzierbar sicherzustellen, ist die Positionierhilfe 5 durch die Person nutzbar, wobei die Positionierhilfe 5 eingerichtet ist, die Person beim Positionieren des Gesichts 7 für die wenigstens eine Bildaufnahme zu unterstützen, derart, dass bei der Bildaufnahme Bildaufnahme-Bedingungen zumindest betreffend die Gesichtsposition einstellbar sind, derart, dass die Position des Gesichts 7 relativ zur Projektionseinrichtung 3 und zur Kameraeinrichtung 4 den Bildaufnahme-Bedingungen entspricht, die zuvor beim Aufnehmen von Referenzbildaufnahmen für das Gesicht 7 mit den Referenzpunkten 8 angewendet wurden. Auf diese Weise erfolgt das Aufnehmen von Bildern aktuell unter vergleichbaren Bildaufnahme-Bedingungen wie das Aufnehmen von Referenzbildern für das Gesicht 7 mit den Referenzpunkten zuvor.

Es ist eine Auswertevorrichtung 6 vorgesehen, die einen oder mehrere Prozessoren zur Datenverarbeitung und einen Speicher aufweist. In dem Speicher sind digitale Bilddaten betreffend das eine oder die mehreren Referenzbildaufnahmen für das Gesicht 7 mit den Referenzpunkten 8 gespeichert.

Um nun die Person, welcher das Gesicht 7 zugeordnet ist, biometrisch zu identifizieren, werden ein oder mehrere Bildaufnahmen mithilfe der Kameraeinrichtung 4 erfasst. Aus diesen Bildaufnahmen wird in der Auswerteeinrichtung 6 die Verteilung der Referenzpunkte 8 in den Bildaufnahmen bestimmt. Die Verteilung der Referenzpunkte 8 kann dann mit einer Referenzverteilung der Referenzpunkte in den Referenzbildaufnahmen verglichen werden. Bei Übereinstimmung der Verteilungen der Referenzpunkte 8 wird die Person identifiziert.

Das biometrische Identifizieren der Person kann auf diese Weise lokal in der Kunststoffkarte 1 mithilfe der dort zur Verfügung gestellten Elemente und der in der Auswerteeinrichtung 6 bereitgestellten Rechenkapazität ausgeführt werden.

Die Positionierhilfe 5 ist bei dem Ausführungsbeispiel in Fig. 1 mithilfe von zwei Positionierelementen gebildet, die am oberen und am unteren Rand der Kunststoffkarte angeordnet sind und jeweils eine Lichtquelle aufweisen. Die beiden Lichtquellen sind für die Person, deren Gesicht bestimmt werden soll, nur dann gleichzeitig sichtbar, wenn das Gesicht gegenüber der Karte 1 in einer korrekten Position für die Bildaufnahmen positioniert ist. Alternativ oder ergänzend zu dieser Art der Positionierhilfe kann die Karte 1 eine Spiegeleinrichtung (nicht dargestellt) aufweisen, in deren Bereich Markierungen vorgesehen sind, zum Beispiel in Form eines oder mehrerer Fadenkreuze. Wenn die zu identifizierende Person die Kunststoffkarte vor das Gesicht 7 hält, ist eine korrekte Position beispielsweise dann eingenommen, wenn sich die Pupillen der Augen in den Spiegelbereichen mit den Markierungen spiegeln. Auch auf diese Weise kann die korrekte Position des Gesichts relativ zur Kunststoffkarte 1 und somit relativ zur Projektionseinrichtung 3 sowie zur Kameraeinrichtung 4 eingestellt werden.

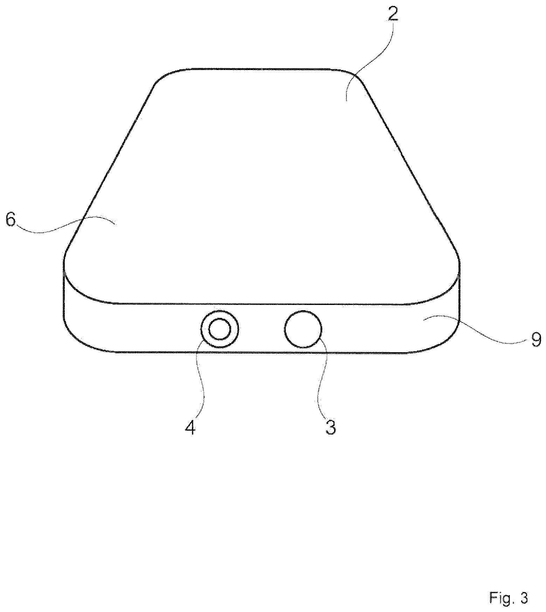

Fig. 3 zeigt eine schematische Darstellung in Verbindung mit einer weiteren Ausführung, wobei die Projektionseinrichtung 3 und die Kameraeinrichtung 4 seitlich im Bereich eines Rands 9 des Kartenkörpers 2 integriert sind. In diesem Fall kann der Kartenkörper 2 eine Dicke von etwa 1 mm bis etwa 2 mm aufweisen. Eine solche Karte kann zum Beispiel eine Karte nach dem ID-T Format (DIN/ISO18328-2) sein.

In diesem Fall ist die Positionierhilfe der Kartenkörper 2 selbst. Wenn der Kartenkörper 2 vom Nutzer im Abstand einer Armlänge vor sein Gesicht hält und nur noch den Rand 9 sieht, ist die Position des Gesichts relativ zur Projektionseinrichtung 3 und zur Kameraeinrichtung 4 optimal und wiederholgenau ausgerichtet. Dies gestattet eine überraschend einfache Handhabung. Zum anderen hat diese Ausführungsform den Vorteil, dass der seitliche Einbau der Kameraeinrichtung 4 und Projektionseinrichtung 3 genug Raum für optionale Linsen oder eine Optik bereitstellt.

Alternativ oder ergänzend können auch zusätzliche Positionierhilfen als Lichtquelle ausgeführt sein.

## Patentansprüche

1. Vorrichtung zum biometrischen Identifizieren einer Person mittels Gesichtserkennung, mit:
- einer Projektionseinrichtung (3), die eingerichtet ist, mittels Bildaufnahme detektierbare Referenzpunkte (8) auf ein zum Identifizieren einer Person zu bestimmendes Gesicht (7) zu projizieren;
- einer Kameraeinrichtung (4), die eingerichtet ist, wenigstens eine Bildaufnahme des zu bestimmenden Gesichts (7) mit den hierauf projizierten Referenzpunkten (8) aufzunehmen;
- einer Positionierhilfe (5), die eingerichtet ist, die Person beim Positionieren des Gesichts (7) für die wenigstens eine Bildaufnahme zu unterstützen, derart, dass beim Aufnehmen der wenigstens einen Bildaufnahme Bildaufnahme-Bedingungen zumindest betreffend eine Gesichtsposition einstellbar sind, welche einer Position des Gesichts (7) relativ zu der Projektionseinrichtung (3) und der Kameraeinrichtung (4) beim Aufnehmen einer Referenzbildaufnahme für das Gesicht (7) mit den Referenzpunkten (8) entspricht; und
- einer Auswerteinrichtung (6), die eingerichtet ist, die Person mittels Gesichtserkennung biometrisch zu identifizieren, wobei die Person identifiziert wird, wenn bei einem digitalen Bilddatenvergleich festgestellt wird, dass eine Verteilung der Referenzpunkte (8) auf dem zu bestimmenden Gesicht (7) in der wenigstens einen Bildaufnahme und eine Referenzverteilung der Referenzpunkte (8) in der Referenzbildaufnahme übereinstimmen.

2. Vorrichtung nach Anspruch 1, **dadurch gekennzeichnet, dass** zum Bereitstellen der Referenzpunkte (8) auf dem zu bestimmenden Gesicht (7) ein Projektionsmuster aus der folgenden Gruppe auf das Gesicht projiziert wird: Punkteanordnung und Gittermuster.

3. Vorrichtung nach Anspruch 1 oder 2, **dadurch gekennzeichnet, dass** die Auswerteinrichtung (6) eingerichtet ist, das Prüfen auf Übereinstimmung frei von einer Verwendung von Tiefeninformation auszuführen, die wahlweise aus dem der Bildaufnahme und / oder der Referenzbildaufnahme bestimmbar ist.

4. Vorrichtung nach mindestens einem der vorangehenden Ansprüche, **dadurch gekennzeichnet, dass** die Projektionseinrichtung (3), die Kameraeinrichtung (4), die Positionierhilfe (5) und die Auswerteinrichtung (6) auf einem Kartenkörper (2) angeordnet sind.

5. Vorrichtung nach Anspruch 4, **dadurch gekennzeichnet, dass** die Projektionseinrichtung (3) und die Kameraeinrichtung (4) im Bereich einer Schmalseite des Kartenkörpers (2) angeordnet sind.

6. Vorrichtung nach mindestens einem der vorangehenden Ansprüche, **dadurch gekennzeichnet, dass** die Projektionseinrichtung (3), die Kameraeinrichtung (4), die Positionierhilfe (5) und die Auswerteinrichtung (6) auf einem Identitätsdokument angeordnet sind.

7. Vorrichtung nach mindestens einem der vorangehenden Ansprüche, **dadurch gekennzeichnet, dass** die Positionierhilfe (5) eine Spiegeleinrichtung aufweist, die eingerichtet ist, bei korrekter Positionierung des zu bestimmenden Gesichts (7) die Augen in Markierungen auf der Spiegeleinrichtung zu spiegeln.

8. Vorrichtung nach mindestens einem der vorangehenden Ansprüche, **dadurch gekennzeichnet, dass** die Positionierhilfe (5) Lichtquellen aufweist, die eingerichtet sind, für die Person dann gleichzeitig sichtbar zu sein, wenn das zu bestimmende Gesicht (7) in der Referenzposition angeordnet ist.

9. Vorrichtung nach mindestens einem der vorangehenden Ansprüche, **dadurch gekennzeichnet, dass** die Projektionseinrichtung (3) eine holografische Projektionseinrichtung aufweist.

10. Vorrichtung nach mindestens einem der vorangehenden Ansprüche, **dadurch gekennzeichnet, dass** die Projektionseinrichtung (3) eingerichtet ist, die Referenzpunkte (8) auf dem zu bestimmenden Gesicht (7) mittels Abstrahlen von Lichtstrahlen mit einer Wellenlänge im sichtbaren Bereich und / oder im Bereich nahes Infrarot bereitzustellen.

11. Verfahren zum biometrischen Identifizieren einer Person mittels Gesichtserkennung, mit:
- Positionieren einer Projektionseinrichtung (3), einer Kameraeinrichtung (4) und eines zu bestimmenden Gesichts (7) einer Person relativ zueinander unter Verwendung einer Positionierhilfe (5), die eingerichtet ist, die Person beim Positionieren des Gesichts (7) für wenigstens eine Bildaufnahme mit der Kameraeinrichtung (4) zu unterstützen, derart, dass beim Aufnehmen der wenigstens einen Bildaufnahme Bildaufnahme-Bedingungen zumindest betreffend eine Gesichtsposition eingestellt werden, welche einer Position des Gesichts (7) relativ zu der Projektionseinrichtung (3) und der Kameraeinrichtung (4) beim Aufnehmen einer Referenzbildaufnahme für das Gesicht mit den Referenzpunkten entspricht:
- Projizieren von Referenzpunkten (8), die mittels Bildaufnahme detektierbar sind, auf das zum Identifizieren der Person zu bestimmende Gesicht (7) mittels der Projektionseinrichtung (3);
- Aufnehmen der wenigstens einen Bildaufnahme des zu bestimmenden Gesichts (7) mit den hierauf projizierten Referenzpunkten (8) mittels der Kameraeinrichtung (4); und
- biometrisches Identifizieren der Person mittels Gesichtserkennung mit Hilfe einer Auswerteinrichtung (6), wobei die Person identifiziert wird, wenn bei einem digitalen Bilddatenvergleich festgestellt wird, das eine Verteilung der Referenzpunkte (8) auf dem zu bestimmenden Gesicht (7) in der wenigstens eine Bildaufnahme und eine Referenzverteilung der Referenzpunkte (8) in der Referenzbildaufnahme übereinstimmen.

## Claims

1. A device for the biometric identification of a person by means of facial recognition having:
- a projection device (3) that is configured to project reference points (8) that can be detected by means of image capture onto a face (7) to be determined in order to identify a person;
- a camera device (4) that is configured to capture at least one image of the face (7) to be determined with the reference points (8) projected thereupon;
- a positioning aid (5) that is configured to assist the person in positioning their face (7) for at least one image capture, in such a manner that, when capturing the at least one image, image capturing conditions are adjustable at least with respect to a facial position that corresponds to a position of the face (7) relative to the projection device (3) and the camera device (4) when capturing a reference image for the face (7) with the reference points (8); and
- an evaluation device (6) that is configured to biometrically identify the person by means of facial recognition, wherein the person is identified when it is determined during a digital image data comparison that a distribution of the reference points (8) on the face (7) being identified in the at least one image capture and a reference distribution of the reference points (8) in the reference image capture match.

2. The device according to claim 1, **characterized in that**, in order to provide the reference points (8) on the face (7) being identified, a projection pattern from the following group is projected onto the face: point arrangement and grid pattern.

3. The device according to claim 1 or 2, **characterized in that** the evaluation device (6) is configured to check for a match free from using depth information that is optionally determinable from the image capture and/or the reference image capture.

4. The device according to at least one of the preceding claims, **characterized in that** the projection device (3), the camera device (4), the positioning aid (5) and the evaluation device (6) are arranged on a card body (2).

5. The device according to claim 4, **characterized in that** the projection device (3) and the camera device (4) are arranged in the region of a narrow side of the card body (2).

6. The device according to at least one of the preceding claims, **characterized in that** the projection device (3), the camera device (4), the positioning aid (5) and the evaluation device (6) are arranged on an identity document.

7. The device according to at least one of the preceding claims, **characterized in that** the positioning aid (5) has a mirror device that is configured to reflect the eyes in markings on the mirror device when the face (7) being identified is correctly positioned.

8. The device according to at least one of the preceding claims, **characterized in that** the positioning aid (5) comprises light sources that are configured to be simultaneously visible to the person when the face (7) being identified is in the reference position.

9. The device according to at least one of the preceding claims, **characterized in that** the projection device (3) has a holographic projection device.

10. The device according to at least one of the preceding claims, **characterized in that** the projection device (3) is configured to provide the reference points (8) on the face (7) being identified by means of the emission of light beams with a wavelength in the visible range and/or in the near-infrared range.

11. A method for the biometric identification of a person by means of facial recognition comprising:
- positioning of a projection device (3), a camera device (4), and a face (7) to be identified of a person relative to one another using a positioning aid (5) that is configured to assist the person in positioning their face (7) for at least one image capture with the camera device (4), in such a manner that when capturing the at least one image, image capturing conditions are adjusted at least with respect to a facial position that corresponds to a position of the face (7) relative to the projection device (3) and the camera device (4) when capturing a reference image for the face with the reference points;
- projection of reference points (8) that can be detected by means of image capture onto the face (7) to be determined, in order to identify the person, by means of the projection device (3);
- capture of the at least one image of the face (7) to be determined, with the reference points (8) projected thereupon, by means of the camera device (4); and
- biometric identification of the person by means of facial recognition with the help of an evaluation device (6), wherein the person is identified when it is determined during a digital image data comparison that a distribution of the reference points (8) on the face (7) being identified in the at least one image capture and a reference distribution of the reference points (8) in the reference image capture match.

## Revendications

1. Dispositif d'identification biométrique d'une personne par reconnaissance faciale, comportant :
- un dispositif de projection (3) qui est configuré : projeter des points de référence (8) détectables par enregistrement d'image sur un visage (7) à déterminer pour identifier une personne;
- un dispositif de caméra (4) qui est configuré pour enregistrer au moins une image du visage (7) à déterminer avec les points de référence (8) projetés dessus ;
- une aide au positionnement (5), qui est configurée pour aider la personne à positionner son visage (7) pour prendre en charge ledit au moins un enregistrement d'image, de telle sorte que lors de l'enregistrement dudit au moins un enregistrement d'image, les conditions d'enregistrement d'image peuvent être définies au moins par rapport à une position du visage, qui correspond à une position du visage (7) par rapport au dispositif de projection (3) et au dispositif de caméra (4) lors de l'enregistrement d'un enregistrement d'image de référence pour le visage (7) avec les points de référence (8) ; et
- un dispositif d'évaluation (6), qui est configuré pour identifier biométriquement la personne à l'aide d'une reconnaissance faciale, dans lequel la personne est identifiée si, lors d'une comparaison de données d'image numérique, il est déterminé qu'une répartition des points de référence (8) sur le visage (7) à déterminer dans au moins un enregistrement d'image et une répartition de référence des points de référence (8) dans l'enregistrement d'image de référence concordent.

2. Dispositif selon la revendication 1, **caractérisé en ce que** pour fournir les points de référence (8) sur le visage (7) à déterminer, un motif de projection du groupe suivant est projeté sur le visage : agencement de points et motif de grille.

3. Dispositif selon la revendication 1 ou 2, **caractérisé en ce que** le dispositif d'évaluation (6) est agencé pour effectuer le contrôle de concordance sans utiliser d'informations de profondeur, qui peuvent être déterminées éventuellement d'après l'enregistrement d'images et/ou l'enregistrement d'image de référence.

4. Dispositif selon au moins une des revendications précédentes, **caractérisé en ce que** le dispositif de projection (3), le dispositif de caméra (4), l'aide au positionnement (5) et le dispositif d'évaluation (6) sont disposés sur un corps de carte (2).

5. Dispositif selon la revendication 4, **caractérisé en ce que** le dispositif de projection (3) et le dispositif de caméra (4) sont disposés dans la zone d'un côté étroit du corps de carte (2).

6. Dispositif selon au moins une des revendications précédentes, **caractérisé en ce que** le dispositif de projection (3) et le dispositif de caméra (4), l'aide au positionnement (5) et le dispositif d'évaluation (6) sont disposés sur un document d'identité.

7. Dispositif selon au moins une des revendications précédentes, **caractérisé en ce que** l'aide au positionnement (5) comporte un dispositif miroir qui est agencé pour refléter les yeux dans des marquages sur le dispositif miroir lorsque le visage à déterminer (7) est correctement positionné.

8. Dispositif selon au moins une des revendications précédentes, **caractérisé en ce que** l'aide au positionnement (5) comporte des sources lumineuses qui sont conçues pour être visible par la personne en même temps, lorsque le visage à déterminer (7) est disposé dans la position de référence.

9. Dispositif selon au moins une des revendications précédentes, **caractérisé en ce que** le dispositif de projection (3) comporte un dispositif de projection holographique.

10. Dispositif selon au moins une des revendications précédentes, **caractérisé en ce que** le dispositif de projection (3) est configuré pour afficher les points de référence (8) pour fournir le visage (7) à déterminer en émettant des faisceaux lumineux avec une longueur d'onde dans le domaine visible et/ou dans le domaine proche infrarouge.

11. Procédé d'identification biométrique d'une personne par reconnaissance faciale, comportant :
- le positionnement d'un dispositif de projection (3), d'un dispositif de caméra (4) et d'un visage (7) d'une personne à déterminer l'un par rapport à l'autre à l'aide d'une aide au positionnement (5) qui est configurée pour positionner la personne lors du positionnement du visage (7) pour assister au moins un enregistrement d'image avec le dispositif de caméra (4), de telle sorte que lors de l'enregistrement d'au moins un enregistrement d'image, les conditions soient réglées au moins en ce qui concerne une position du visage, qui correspond à une position du visage (7) par rapport au dispositif de projection (3) et au dispositif de caméra (4) lors de l'enregistrement d'une image de référence pour le visage avec les points de référence ;
- projection de points de référence (8), détectables par enregistrement d'images, sur le visage (7) à déterminer pour identifier la personne au moyen du dispositif de projection (3) ;
- enregistrement d'au moins un enregistrement d'image du visage à déterminer (7) avec les points de référence (8) projetés sur celui-ci au moyen du dispositif de caméra (4) ; et
- identification biométrique de la personne au moyen de la reconnaissance faciale à l'aide d'un dispositif d'évaluation (6), dans lequel la personne est identifiée si, lors d'une comparaison de données d'image numérique, il est déterminé qu'une répartition des points de référence (8) sur le visage (7) à déterminer dans au moins un enregistrement d'image et une répartition de référence des points de référence (8) dans l'enregistrement d'image de référence concordent.
